# EUROPÄISCHE PATENTANMELDUNG

(11) **EP 4 682 655 A2**
(43) Veröffentlichungstag der Anmeldung: **21.01.2026**
(21) Anmeldenummer: 25221369.9
(22) Anmeldetag: 11.05.2023
(51) Int. Cl.: G05B 19/05

(54) **STEUERUNGSSYSTEM UND VERFAHREN ZUR STEUERUNG EINER VORRICHTUNG ODER ANLAGE**

(62) Teilanmeldung aus: 23172923.7
(71) Anmelder: Siemens Aktiengesellschaft, 80333 München (DE)
(72) Erfinder: Baierlein, Michael, 91056 Erlangen (DE); Budday, Dominik, 91058 Erlangen (DE); Frank, Matthias, 91056 Erlangen (DE); Horn, Christoph, 91056 Erlangen (DE); Stein, Alexander, 91056 Erlangen (DE)
(74) Vertreter: Siemens Patent Attorneys

(57) **Zusammenfassung**

Die Erfindung betrifft ein Steuerungssystem zur Steuerung einer Vorrichtung oder Anlage, wobei bezüglich der Steuerung der Vorrichtung oder Anlage mindestens eine Sicherheitsfunktion vorgesehen ist, wobei die mindestens eine Sicherheitsfunktion mindestens eine Sicherheitsunterfunktion aufweist, wobei das Steuerungssystem eine erste sicherheitsgerichtete Steuerungseinrichtung sowie eine zweite sicherheitsgerichtete Steuerungseinrichtung umfasst, wobei die erste sicherheitsgerichtete Steuerungseinrichtung und die zweite sicherheitsgerichtete Steuerungseinrichtung über eine sicherheitsgerichtete Kommunikationsverbindung kommunikativ gekoppelt sind, wobei die erste sicherheitsgerichtete Steuerungseinrichtung zur Ausführung der mindestens einen Sicherheitsfunktion ausgebildet und eingerichtet ist, wobei die zweite sicherheitsgerichtete Steuerungseinrichtung auf einer Prozessoreinheit basierend und zur Ausführung der mindestens einen Sicherheitsunterfunktion unter Verwendung von über die sicherheitsgerichtete Kommunikationsverbindung von der ersten sicherheitsgerichteten Steuerungseinrichtung empfangenen Eingangsdaten ausgebildet und eingerichtet ist. Die Erfindung betrifft ferner ein zugeordnetes Verfahren zur Steuerung einer Vorrichtung oder Anlage.

## Beschreibung

Die Erfindung betrifft ein Steuerungssystem zur Steuerung einer Vorrichtung oder Anlage, wobei bezüglich der Steuerung der Vorrichtung oder Anlage mindestens eine Sicherheitsfunktion vorgesehen ist. Die Erfindung betrifft ferner ein zugeordnetes Verfahren.

Der Einsatz von fehlersicheren Steuerungen in der industriellen Automatisierungstechnik ist weit verbreitet, mit typischen Anwendungsfällen wie sichere Verriegelung oder Überwachung von Grenzwerten. Durch die Entwicklung hin zu effizienter und gleichzeitig flexibler Produktion steigen jedoch auch die Anforderungen an Safety-Programme und das sichere Überwachen solch dynamischer Prozesse und Anlagen in Echtzeit erfordert komplexere Safety Lösungen.

Es sind aus dem Stand der Technik Lösungen bekannt, bei denen zu Zwecken der Erfüllung von Safety-Anforderungen eine codierte Verarbeitung bzw. Coded Processing erfolgt. Hierbei werden sicherheitsrelevante Verarbeitungsschritte auf zwei diversitären Wegen mithilfe codierter Daten und Operationen durchgeführt, was eine Hardware-Redundanz überflüssig macht und gleichzeitig eine Durchgängigkeit der Lösung sowie Skalierbarkeit mit sich bringt.

Ferner sind sogenannte Lockstep Prozessoren bekannt. Im Hinblick auf die logische Verarbeitung bieten Lockstep Prozessoren eine meist kostengünstige Variante, die durch ihre intrinsische Mehrkern-Architektur und geeignete Ablauf- und Vergleichsmechanismen eine On-Chip Redundanz erreichen.

Aus der Offenlegungsschrift WO 2016/138956 A1 ist bekannt, Programmteile, die nicht codiert abgearbeitet werden können, in Hardware-Redundanz abzuarbeiten. Notwendig hierfür sind zwei Prozessoreinheiten für die nicht-codierte Ausführung.

Die Gebrauchsmusterschrift DE 20 2015 004120 U1 zeigt ein Sicherheitssteuerungssystem für eine Verpackungsmaschine mit einer Master-Sicherheitssteuerung und einer Slave-Sicherheitssteuerung, die über Feldbussysteme miteinander kommunizieren.

Die Offenlegungsschrift DE102020127515A1 zeigt eine Vorrichtung zum Steuern eines sicherheitskritischen Prozesses mit einer ersten und zweiten sicheren Signaleinheit, die über ein Stromnetz kommunizieren.

Die Veröffentlichungsschrift der Europäischen Patentanmeldung EP3470939A1 zeigt ein Überwachen der Sicherheitsintegrität einer durch ein Sicherheitssystem bereitgestellten Sicherheitsfunktion, wobei Sicherheitskennwerte entlang einer Sicherheitskette weitergereicht werden.

Vor diesem Hintergrund ist es eine Aufgabe der vorliegenden Erfindung eine fehlersichere und performante Bearbeitung von Programmen mit komplexen Sicherheitsanforderungen zu verbessern. Diese Aufgabe wird durch die Merkmale der unabhängigen Ansprüche gelöst. Vorteilhafte Ausgestaltungen sind in den abhängigen Ansprüchen angegeben.

Die Erfindung betrifft ein Steuerungssystem zur Steuerung einer Vorrichtung oder Anlage, wobei bezüglich der Steuerung der Vorrichtung oder Anlage mindestens eine Sicherheitsfunktion vorgesehen ist,
wobei die mindestens eine Sicherheitsfunktion mindestens eine Sicherheitsunterfunktion aufweist,
wobei das Steuerungssystem eine erste sicherheitsgerichtete Steuerungseinrichtung sowie eine zweite sicherheitsgerichtete Steuerungseinrichtung umfasst,
wobei die erste sicherheitsgerichtete Steuerungseinrichtung und die zweite sicherheitsgerichtete Steuerungseinrichtung über eine sicherheitsgerichtete Kommunikationsverbindung kommunikativ gekoppelt sind,
wobei die erste sicherheitsgerichtete Steuerungseinrichtung zur Ausführung der mindestens einen Sicherheitsfunktion ausgebildet und eingerichtet ist,
wobei die zweite sicherheitsgerichtete Steuerungseinrichtung auf einer Prozessoreinheit basierend und zur Ausführung der mindestens einen Sicherheitsunterfunktion unter Verwendung von über die sicherheitsgerichtete Kommunikationsverbindung von der ersten sicherheitsgerichteten Steuerungseinrichtung empfangenen Eingangsdaten ausgebildet und eingerichtet ist.

Eine sicherheitsgerichtete Steuerungseinrichtung gemäß der Begrifflichkeit der vorliegenden Anmeldung ist derart ausgebildet und eingerichtet, dass möglichst garantiert werden kann, dass beim Betrieb der sicherheitsgerichteten Steuerungseinrichtung kein gefährlicher Zustand entstehen kann - beispielsweise durch einen Ausfall einer Komponente. Eine sicherheitsgerichtete Steuerungseinrichtung kann weiterhin derart ausgebildet und eingerichtet sein, dass im Rahmen des Betriebs der sicherheitsgerichteten Steuerungseinrichtung kein inakzeptables Risiko durch die Vorrichtung oder Anlage entstehen kann.

Unter einer Sicherheitsfunktion ist gemäß der vorliegenden Anmeldung eine Funktion zu verstehen, welche sicherheitsgerichteten Kriterien genügen muss, so dass das System, auf dem die Sicherheitsfunktion ausgeführt wird, zu einem sicherheitsgerichteten System wird. Diese Kriterien sind beispielsweise durch Safety-Vorgaben definiert oder standardisiert. Beispielsweise müssen Vorgaben erfüllt werden, die das Einleiten von Stoppvorgängen, das Einhalten von Abständen zu Zonengrenzen etc. festlegen. Insbesondere sind hier die Safety Normen IEC 61508, ISO 10218 zu nennen, die es je nach Anwendungsfall einzuhalten gilt. Unter einer sicherheitsgerichteten Funktion der Steuerung wird insbesondere eine sicherheitsgerichtet ausgeführte Anhalte- oder Brems-Funktion bezeichnet.

Zudem ist die Ausführung von Sicherheitsfunktionen so vorzusehen, dass die sogenannte funktionale Sicherheit gewährleistet ist, d.h. dass System- oder Komponenten-Ausfälle oder - Fehler entdeckt werden und zum Einnehmen eines sicheren Zustandes der Vorrichtung oder Anlage führen. Eine funktional-gesicherte Ausführung umfasst zusätzlich zur Verarbeitung oder Berechnung oder Überprüfung von Werten zur Erzeugung von Ausgangswerten der Steuerung auch eine Überprüfung auf fehlerfreie Durchführung des jeweiligen Verarbeitungsschritts. Beispielsweise kann jeder funktional-gesicherte Verarbeitungsschritt durch einen arithmetisch kodierten Prozessorbefehl und/oder kodierte Datenwerte gebildet sein und/oder es kann zum Verifizieren einer Plausibilität eines Resultats des Verarbeitungsschritts überprüft werden, ob das Resultat des Verarbeitungsschrittes in einem vorbestimmten Intervall zulässiger Werte liegt. Die durch die funktionale Sicherung zusätzlich vorgesehene Prüfung verändert insbesondere nicht das Resultat, sondern erzeugt nur ein zusätzliches Signal, dass der Verarbeitungsschritt fehlerfrei war (keine Bitfehler und/oder Resultat des Verarbeitungsschritts innerhalb eines zulässigen Werteintervalls) oder dass der Verarbeitungsschritt fehlerhaft war (Bitfehler, unplausibles Resultat außerhalb des Werteintervalls). Bei einem fehlerhaften Verarbeitungsschritt wird insbesondere das Resultat verworfen und der sichere Zustand eingeleitet.

Die Sicherheitsfunktion weist vorliegend eine Sicherheitsunterfunktion auf. Die Sicherheitsunterfunktion unterliegt in Hinblick auf Safety den gleichen Anforderungen wie die Sicherheitsfunktion. Die Sicherheitsunterfunktion ist hinsichtlich der Ausführung auslagerbar oder abkapselbar. Insbesondere sind Eingänge der Sicherheitsunterfunktion definiert, die dieser von der Sicherheitsfunktion übergeben werden, sowie Ausgänge der Sicherheitsunterfunktion definiert, die von dieser an die Sicherheitsfunktion geliefert werden. Ferner werden Eingangswerte beispielsweise direkt von einem an die zweite sicherheitsgerichtete Steuerungseinrichtung angeschlossenen Sensor an die Sicherheitsunterfunktion übertragen. Beispielsweise sind von der Sicherheitsunterfunktion besonders rechenaufwändige, komplexe oder zeitintensive Programmabschnitte des Steuerungsprogramms umfasst. An den Programmabschnitt der Sicherheitsunterfunktion bestehen beispielsweise besonders hohe Komplexitäts- und Performance-Anforderungen. Die Komplexität und damit verbundene hohe Verarbeitungszeiten kommen insbesondere durch die Safety-Anforderung und die damit verbundene Anforderung an eine sicherheitsgerichtete Verarbeitung zustande.

Die Sicherheitsunterfunktion wird vorteilhaft auf der zweiten, auf einer Prozessoreinheit basierenden Sicherheitseinrichtung verarbeitet. Diese zweite Prozessoreinheit wird vorzugsweise entsprechend optimiert auf die sicherheitsgerichtete Verarbeitung der komplexen Programmabschnitte ausgebildet. Dies lässt insbesondere besonders vorteilhaft die Funktionsweise der ersten Sicherheitseinrichtung unverändert.

Bei der ersten Sicherheitseinrichtung handelt es sich beispielsweise um eine sogenannte F-PLC, d.h. eine fehlersicher ausgestaltete PLC zur Steuerung von Vorrichtungen oder Anlagen oder Komponenten der Anlage. Diese kann in gewohnter Weise für wenig komplexe Programmabschnitte verwendet werden und insbesondere wie gewohnt an eine fehlersichere Sensorik sowie eine fehlersichere Aktorik angebunden sein. Das Auslagern bestimmter Programmabschnitte an die zweite Sicherheitseinrichtung ermöglicht einen flexiblen Einsatz des Steuerungssystems auch für Anwendungsfälle wie sicherheitsgerichtete Robotik, da gerade hier oftmals kartesische Berechnungen im dreidimensionalen Raum mit entsprechenden arithmetischen, insbesondere trigonometrischen, Operationen notwendig sind sowie die Verwendung von Gleitkommazahlen oftmals ein Erfordernis ist.

Die erste Sicherheitseinrichtung kann vorteilhafter Weise einen Software-basierten Mechanismus für die sicherheitsgerichtete Ausführung der Sicherheitsfunktion aufweisen, der unabhängig von der Komplexität der Sicherheitsfunktion insgesamt gewählt werden kann. Nur durch eine Diversität bei der Ausführung der Sicherheitsfunktion auf der ersten Sicherheitseinrichtung in Software kann dann dieser Abschnitt des Programms sicherheitsgerichtet erfolgen. Es können die damit einhergehenden Vorteile einer Software-Redundanz genutzt werden, insbesondere der Einsatz in Kombination mit nichtsicherheitsgerichteter Hardware oder die Skalierbarkeit.

Die zweite Sicherheitseinrichtung kann nun vorteilhafterweise auf die Anforderungen der Sicherheitsunterfunktion zugeschnitten und optimiert ausgeführt sein. Der auf der ersten Sicherheitseinrichtung vorgesehene sicherheitsgerichtete Mechanismus ist insbesondere auf der zweiten Sicherheitseinrichtung nicht ebenfalls vorzusehen, es wird stattdessen ein für komplexe Steuerungsprogrammabschnitte besser geeigneter Mechanismus für eine sicherheitsgerichtete Verarbeitung gewählt.

Auf der Prozessoreinheit wird insbesondere ein Mechanismus implementiert, der eine On-Chip Redundanz umsetzt. Dadurch ist für die komplexe Unterfunktion weder eine aufwändige Verarbeitung in Software auf diversitären Wegen notwendig noch eine vollständig zweikanalige, redundante Realisierung in Hardware mit der Notwendigkeit mehrerer PLCs. Dadurch werden hohen Kosten, bedingt durch aufwändige individuelle Architekturen, zum Teil auch wegen fehlender Standards, oder durch manuelle Programmanpassungen, bei welchen eine geeignete Strukturierung des Anwenderprogramms gewählt werden muss, vermieden. Zugleich wird eine hohe Performance erreicht und es muss nicht der Nachteil langsamer Zykluszeiten in Kauf genommen werden. Unter der Prozessoreinheit wird vorliegend eine Hardware bestehend aus einem Prozessor verstanden im Gegensatz zu Verarbeitungen des Programmcodes auf Hardware mit mehreren Prozessoren.

Zur Sicherstellung der Sicherheit des Systems ist eine sichere Kommunikation zwischen den Sicherheitseinrichtungen über eine sicherheitsgerichtete Kommunikationsverbindung, insbesondere unter Verwendung eines sicheren Protokolls, beispielsweise des sogenannten PROFIsafe-Protokolls, vorgesehen. Insbesondere werden damit vorteilhaft Nachrichtenfehler beim Datenaustausch zwischen den Sicherheitseinrichtungen aufgedeckt.

Das vorgeschlagene Steuerungssystem ermöglicht eine fehlersichere und performante Bearbeitung von Sicherheitsunterprogrammen mit komplexen Sicherheitsanforderungen bei gleichzeitiger Anbindung an eine mit diversitären Verarbeitungswegen arbeitende, vom Anwender frei programmierbare, fehlersichere Steuerung.

Durch die Auslagerung des Sicherheitsunterprogramms werden auf der codiert-arbeitenden Steuerung Ressourcen frei, die vorteilhafterweise für andere Safety- bzw. Standard-Operationen zur Verfügung stehen.

Gemäß einer Ausgestaltung ist die erste sicherheitsgerichtete Steuerungseinrichtung ausgebildet und eingerichtet, die mindestens eine Sicherheitsfunktion unter Verwendung eines codiert arbeitenden Verfahrens, insbesondere eines "Coded Processing"-Verfahrens, auszuführen.

Ein codiert arbeitendes Verarbeitungsverfahren beruht auf dem Prinzip der diversitären Ausführung von Software Code auf einer Prozessoreinheit. Insbesondere werden sicherheitsrelevante Verarbeitungsschritte auf zwei diversitären Wegen mithilfe codierter Daten und Operationen durchgeführt, was eine Hardware-Redundanz für diesen Verarbeitungsschritt überflüssig macht und gleichzeitig eine Durchgängigkeit der Lösung sowie Skalierbarkeit mit sich bringt.

Es kommt beispielsweise das sogenannte "Diversified Encoding" zum Einsatz, das auf zwei unterschiedlichen Ausführungen derselben Sicherheitsfunktion beruht. Diese zwei Ausführungen sind:
- Native Ausführung: Die native Ausführung entspricht der Ausführung der originalen Sicherheitsfunktion ohne Kodierung. Der Quellcode für die originale Sicherheitsfunktion bildet dabei den Quellcode der nativen Ausführung. Die native Ausführung arbeitet auf nativen (originalen) Eingabewerten und dem nativen Zustand. Sie ändert nur den nativen Zustand. Das Ergebnis der nativen Ausführung ist die native Ausgabe.
- Kodierte Ausführung: Die kodierte Ausführung (unter Verwendung des Coded Processing) basiert auf der kodierten Variante der Sicherheitsfunktion. Sie arbeitet auf kodierten Eingabewerten und dem kodierten Zustand. Das Ergebnis ist die kodierte Ausgabe.

Beide Ausführungen sind vollkommen unabhängige Berechnungen, die jedoch auf denselben Werten operieren. Die kodierten Eingabewerte sind die kodierten Varianten der nativen Eingabewerte. Der Quellcode der nativen Sicherheitsfunktion wird verwendet, um den Quellcode der kodierten Ausführung zu erstellen. Die Erstellung kann entweder manuell oder - empfohlen für die Reproduzierbarkeit - mit einem entsprechenden Werkzeug erfolgen.

Gemäß einer Ausgestaltung ist die zweite sicherheitsgerichtete Steuerungseinrichtung ausgebildet und eingerichtet, die mindestens eine Sicherheitsunterfunktion unter Verwendung eines uncodiert arbeitenden Verfahrens auszuführen. Durch den Einsatz eines uncodiert arbeitenden Verfahrens auf der zweiten sicherheitsgerichteten Steuerungseinrichtung kann das Unterprogramm mit hohen Performance- bzw. Komplexitätsanforderungen auf eine zweite fehlersichere, performante Steuereinheit, z.B. durch geeignete On-Chip Hardware Redundanz ausgelagert werden.

Auf der ersten sicherheitsgerichteten Steuerungseinrichtung können alle existierenden Tools zur Automatisierung und Anbindung von Sensorik und Aktorik vorteilhaft genutzt werden. Zur Ausführung des komplexen Unterprogramms mit hohen Performance Anforderungen, welches auf der ersten sicherheitsgerichteten Steuerungseinrichtung aufgrund der dort verwendeten codierten Verarbeitung nicht mit ausreichend hoher Zykluszeit oder nicht mit vernünftigem Arbeitsaufwand ausführbar ist, wird die zweite sicherheitsgerichtete Steuerungseinrichtung als Safety-Coprozessor genutzt.

Insbesondere für Berechnungen oder Programmabschnitte, in welchen Daten beispielsweise in Arrays gespeichert werden sollen, als Matrix oder als Vektor angelegt werden sollen, kommen gängige Sicherheitsprogramme auf PLCs wie sie bei der Ausführung auf der ersten sicherheitsgerichteten Steuerungseinrichtung typischerweise zum Einsatz kommen, an ihre Grenzen. Ferner gibt es auch keine geeigneten Möglichkeiten zur Speicherung remanenter Daten. Dynamische Größen, die sich im Prozess ändern und als Zwischenwerte gespeichert werden, beispielsweise zur genaueren Abschätzung von Positionen bewegter Geräte in industriellen Anlagen, können auf der zweiten sicherheitsgerichteten Steuerungseinrichtung vorteilhaft eingesetzt werden.

Die zweite sicherheitsgerichtete Steuerungseinrichtung ist durch ein sicheres Protokoll zur Kommunikation der relevanten Ein- und Ausgänge des Unterprogramms an die erste sicherheitsgerichtete Steuerungseinrichtung angebunden. Das komplexe Unterprogramm kann auf dem Co-Prozessor mit Hilfe aller dort verfügbaren Operationen performant ausgeführt und die Ergebnisse sicher an die F-PLC zurückkommuniziert werden.

In Varianten ist die zweite sicherheitsgerichtete Steuerungseinrichtung fest programmiert. Vorteilhafterweise wird sie so auf spezifische Anwendungen und eingesetzte Hardware hin optimiert eingerichtet, beispielsweise durch Inlinen oder durch Lokatieren bestimmter Funktionen in performante Bereiche. Ferner ist vorteilhafterweise ein Vorab-Test, insbesondere auch mit Zertifizierung der spezifischen Anwendung, durchführbar.

In alternativen Ausführungen ist die zweite sicherheitsgerichtete Steuerungseinrichtung frei programmierbar, so dass die zweite sicherheitsgerichtete Steuerungseinrichtung quasi standardisiert für eine Vielzahl von Anwendungsfällen zur Verfügung gestellt werden kann und anwendungsspezifische Anpassungen durch den Endnutzer beispielsweise in Form einer Safety App vorgenommen werden können.

Gemäß einer Ausgestaltung ist die zweite sicherheitsgerichtete Steuerungseinrichtung ausgebildet und eingerichtet, eine Hardware-Redundanz auf der Prozessoreinheit, insbesondere basierend auf einer Mehrkernarchitektur mit Lockstep-Kernen, umzusetzen. Es wird somit eine On-Chip-Redundanz, d.h. eine redundante Ausführung auf einer einzigen Prozessoreinheit, erreicht. Beim Einsatz von Lockstep-Kernen führen beispielsweise zwei oder mehr Kerne identischen Code aus. Ein unabhängiger Komparator vergleicht die Ergebnisse und erkennt an unterschiedlichen Werten bei der Ausführung Fehler. Beispielsweise nutzen Lock-Step-Kerne eine Verzögerung von wenigen Taktzyklen bei der Verarbeitung identischer Befehle aus und nutzen geringfügige Abweichungen bei der räumlichen Anordnung der Kerne aus, um eine Diversität zu erreichen. Es sind beispielsweise zeitliche und räumliche Unterscheidungen notwendig, um gemeinsame Fehler, sogenannte common cause errors, auszuschließen.

Gemäß einer Ausgestaltung ist die erste sicherheitsgerichtete Steuerungseinrichtung ausgebildet und eingerichtet, von der zweiten sicherheitsgerichteten Steuerungseinrichtung Ausgangsdaten zu empfangen. Beispielsweise werden als Ausgangsdaten Ergebnisse einer Sicherheitsfunktion wie beispielsweise einer Zonenüberwachung erhalten. Beispielsweise verarbeitet dafür die zweite sicherheitsgerichtete Steuerungseinrichtung eine Sicherheitsfunktion insgesamt: Für die Zonenüberwachung werden die Positionen einer Kinematik im kartesischen Raum berechnet. Die Positionen werden beispielsweise abgeglichen mit definierten Zonengrenzen. Als Ergebnis wird ermittelt, ob die Kinematik sich in Sicherheitszonen aufhält, so dass insbesondere ein Stopp der Kinematik eingeleitet werden muss, oder ob sie definierte Arbeitszonen einhält, o.ä. Neben der sicherheitsgerichteten Berechnung von Zwischenwerten in der Sicherheitsfunktion, beispielsweise Positionen, Geschwindigkeiten, Beschleunigungen, Ausrichtungen, etc., erfolgt vorteilhafterweise ferner auch eine Auswertung im Rahmen der Verarbeitung des Sicherheitsfunktionsprogramm, ob Verletzungen von Zonen oder Grenzwerten o.ä. vorliegen oder drohen.

Als Ergebnis wird dann beispielsweise eine Stopp-ID als Ausgangsdatum an die erste sicherheitsgerichtete Steuerungseinrichtung ausgegeben. Beispielsweise wird zudem eine Information mit ausgegeben, welche Reaktion durch die Steuerung insgesamt zu erfolgen hat, d.h. in welcher Art und Weise angeschlossene Aktorik angesteuert werden soll. So wird vorteilhafterweise die gesamte Berechnung und Analyse im Rahmen der Ausführung einer Sicherheitsfunktion auf der zweiten sicherheitsgerichteten Steuerungseinheit ausgeführt. Zu Zwecken der Ausgabe von Steuerungsbefehlen an die Aktorik wird wiederum beispielsweise die erste sicherheitsgerichtete Steuerungseinrichtung genutzt. Ferner wird in einem solchen Szenario vorzugsweise auch für die Kommunikation mit der Sensorik die erste sicherheitsgerichtete Steuerungseinrichtung genutzt, so dass der Safety-Coprozessor lediglich aus Sicht der Peripherie quasi unsichtbar die komplexen Safety-relevanten Berechnungen ausführt. Ferner wird in Ausprägungen nur eine Information über durch die zweite sicherheitsgerichtete Steuerungseinrichtung erhaltene Ergebnisse oder eingeleitete Maßnahmen als Ausgang für die erste sicherheitsgerichtete Steuerungseinheit bereitgestellt. So wird insbesondere ein besonders hoher Durchsatz erreicht.

Gemäß einer Ausgestaltung ist die erste sicherheitsgerichtete Steuerungseinrichtung ausgebildet und eingerichtet, von der zweiten sicherheitsgerichteten Steuerungseinrichtung über die sicherheitsgerichtete Kommunikationsverbindung empfangene Ausgangsdaten für die Ausführung der mindestens einen Sicherheitsfunktion zu verarbeiten. Gemäß dieser Ausgestaltung wird ein Zwischenwert, der in einer Sicherheitsfunktion benötigt wird, von der zweiten sicherheitsgerichteten Steuerungseinrichtung berechnet und geliefert. Beispielsweise werden Werte zu Positionen, Geschwindigkeiten, Beschleunigungen, Ausrichtungen, etc. bereitgestellt, die dann im Rahmen einer Ausführung der Sicherheitsfunktion auf der ersten sicherheitsgerichteten Steuerungseinrichtung weiterverarbeitet werden. Beispielsweise werden so gerade komplexe Berechnungen unter Einbeziehung von trigonometrischen Funktionen oder unter Verwendung von Gleitkommazahlen auf dem Coprozessor ermöglicht und lediglich Werte an die mit Coded Processing arbeitende Safety-PLC zurückgeliefert, die auch codiert ohne Aufwand weiterverarbeitet werden können.

Ferner wird durch die erste sicherheitsgerichtete Steuerungseinrichtung das Einnehmen eines sicheren Zustands initiiert, wenn beispielsweise durch die erste sicherheitsgerichtete Steuerungseinrichtung mittels der auf Codierung basierenden diversitären Programmverarbeitung ein Systemfehler oder Fehlerzustand der ersten sicherheitsgerichteten Steuerungseinrichtung ermittelt wird.

Gemäß einer Ausgestaltung ist die zweite sicherheitsgerichtete Steuerungseinrichtung ausgebildet und eingerichtet, abhängig von einem Ergebnis der Sicherheitsunterfunktion eine Sicherheitsmaßnahme einzuleiten. Das Einleiten einer Sicherheitsmaßnahme erfolgt in Ausgestaltungen direkt durch die zweite sicherheitsgerichtete Steuerungseinrichtung.

Dafür kann Aktorik, insbesondere nur ein bestimmter Teil der Aktorik, direkt an der zweiten sicherheitsgerichteten Steuerungseinrichtung angeschlossen sein. Beispielsweise sind spezielle Antriebe, die die Bewegung einer Kinematik im dreidimensionalen Raum bewirken, direkt von der Steuerung des Co-prozessors ansteuerbar. Not-Stopps werden somit besonders vorteilhaft und ohne Verzögerung durch Kommunikationswege u.ä. direkt umgesetzt.

Die zweite sicherheitsgerichtete Steuerungseinrichtung ist ferner zudem aufgrund der diversitären Ausführung des Programmcodes ausgebildet und eingerichtet, einen Systemfehler zu erkennen. Vorteilhafterweise wird in dem Fall, in dem ein korruptes Systemverhalten, wie beispielsweise ein Ausfall einer Komponente, wie beispielsweise eines Sensors, erkannt wird, oder ein sonstiger Systemfehler, eine Sicherheitsmaßnahme durch die zweite sicherheitsgerichtete Steuerungseinrichtung eingeleitet, die das Einnehmen eines sicheren Zustands bewirkt. Beispielsweise werden der Aktorik direkt Werte vorgegeben, die zur Einnahme des sicheren Zustands führen.

Gemäß einer Ausgestaltung ist die erste sicherheitsgerichtete Steuerungseinrichtung ausgebildet und eingerichtet, eine Sicherheitsmaßnahme in Abhängigkeit von über die sicherheitsgerichtete Kommunikationsverbindung empfangenen Ausgangsdaten einzuleiten. Das Einleiten von Sicherheitsmaßnahmen durch die erste sicherheitsgerichtete Steuerungseinrichtung erfolgt dann über die an die erste sicherheitsgerichtete Steuerungseinrichtung angebundene Aktorik ohne, dass die zweite sicherheitsgerichtete Steuerungseinrichtung durch die Aktorik wahrnehmbar ist. Beispielsweise werden Stopps eingeleitet, wenn Berechnungen im Rahmen der Ausführung der Sicherheitsfunktion auf der ersten sicherheitsgerichteten Steuerungseinrichtung Zonenverletzungen oder Grenzwertverletzungen ergeben oder wenn eine Information zu einem einzuleitenden Stopp, insbesondere eine Stopp-ID, von der zweiten sicherheitsgerichteten Steuerungseinrichtung geliefert werden. Ferner wird auch das Einnehmen eines sicheren Zustands durch die erste sicherheitsgerichtete Steuerungseinrichtung initiiert, wenn beispielsweise durch die zweite sicherheitsgerichtete Steuerungseinrichtung ein Systemfehler oder Fehlerzustand der zweiten sicherheitsgerichteten Steuerungseinrichtung ermittelt wird.

Das Einleiten der Sicherheitsmaßnahme kann wiederum darin bestehen, einen sicheren Zustand aufgrund eines erkannten Systemfehlers einzunehmen. Die zweite sicherheitsgerichtete Steuerungseinrichtung liefert dann beispielsweise Ersatzwerte an die erste sicherheitsgerichtete Steuerungseinrichtung, oder die Kommunikation mit der ersten sicherheitsgerichteten Steuerungseinrichtung wird unterbunden. Die erste sicherheitsgerichtete Steuerungseinrichtung läuft dann in Varianten weiter, da nur auf der zweiten sicherheitsgerichteten Steuerungseinrichtung ein Fehler erkannt wurde. In alternativen Ausführungen leitet auch die erste sicherheitsgerichtete Steuerungseinrichtung vorsichtshalber das Einnehmen eines sicheren Zustands ein, da die Ersatzwerte für die funktionale Sicherheit des Systems als nicht ausreichend angesehen werden.

Die Erfindung betrifft ferner ein Verfahren zur Steuerung einer Vorrichtung oder Anlage, wobei die Vorrichtung oder Anlage mittels mindestens einer Sicherheitsfunktion gesteuert wird,
wobei die mindestens eine Sicherheitsfunktion mindestens eine Sicherheitsunterfunktion aufweist,
wobei das Steuerungssystem eine erste sicherheitsgerichtete Steuerungseinrichtung sowie eine zweite sicherheitsgerichtete Steuerungseinrichtung umfasst,
wobei die erste sicherheitsgerichtete Steuerungseinrichtung und die zweite sicherheitsgerichtete Steuerungseinrichtung über eine sicherheitsgerichtete Kommunikationsverbindung Daten austauschen,
wobei die erste sicherheitsgerichtete Steuerungseinrichtung die mindestens eine Sicherheitsfunktion ausführt,
wobei die zweite sicherheitsgerichtete Steuerungseinrichtung auf einer Prozessoreinheit basiert und die mindestens eine Sicherheitsunterfunktion unter Verwendung von empfangenen Eingangsdaten ausführt.

Gemäß einer Ausgestaltung führt die erste sicherheitsgerichtete Steuerungseinrichtung die mindestens eine Sicherheitsfunktion unter Verwendung eines codiert arbeitenden Verfahrens, insbesondere eines "Coded Processing"-Verfahrens, aus.

Gemäß einer Ausgestaltung führt die zweite sicherheitsgerichtete Steuerungseinrichtung die mindestens eine Sicherheitsunterfunktion unter Verwendung eines uncodiert arbeitenden Verfahrens aus.

Gemäß einer Ausgestaltung setzt die zweite sicherheitsgerichtete Steuerungseinrichtung eine Hardware-Redundanz auf der Prozessoreinheit, insbesondere basierend auf einer Mehrkernarchitektur mit Lockstep-Kernen, um.

Gemäß einer Ausgestaltung empfängt die erste sicherheitsgerichtete Steuerungseinrichtung von der zweiten sicherheitsgerichteten Steuerungseinrichtung Ausgangsdaten.

Gemäß einer Ausgestaltung verarbeitet die erste sicherheitsgerichtete Steuerungseinrichtung von der zweiten sicherheitsgerichteten Steuerungseinrichtung über die sicherheitsgerichtete Kommunikationsverbindung empfangene Ausgangsdaten für die Ausführung der mindestens einen Sicherheitsfunktion.

Gemäß einer Ausgestaltung leitet die zweite sicherheitsgerichtete Steuerungseinrichtung abhängig von einem Ergebnis der Sicherheitsunterfunktion eine Sicherheitsmaßnahme ein.

Gemäß einer Ausgestaltung leitet die erste sicherheitsgerichtete Steuerungseinrichtung eine Sicherheitsmaßnahme in Abhängigkeit von über die sicherheitsgerichtete Kommunikationsverbindung empfangenen Ausgangsdaten ein.

Die Erfindung wird nachfolgend anhand von Ausführungsbeispielen mit Hilfe der Figuren näher erläutert. Es zeigen:
- Figur 1: eine schematische Darstellung von Komponenten des Steuerungssystems gemäß einem ersten Ausführungsbeispiel der Erfindung;
- Figur 2: eine schematische Darstellung von Komponenten des Steuerungssystems gemäß einem zweiten Ausführungsbeispiel der Erfindung;
- Figur 3: eine schematische Darstellung von Komponenten des Steuerungssystems gemäß einem dritten Ausführungsbeispiel der Erfindung,
- Figur 4: eine schematische Darstellung von Komponenten des Steuerungssystems gemäß einem vierten Ausführungsbeispiel der Erfindung.

In den Figuren sind funktionsgleiche Elemente mit denselben Bezugszeichen versehen, sofern nichts anderes angegeben ist.

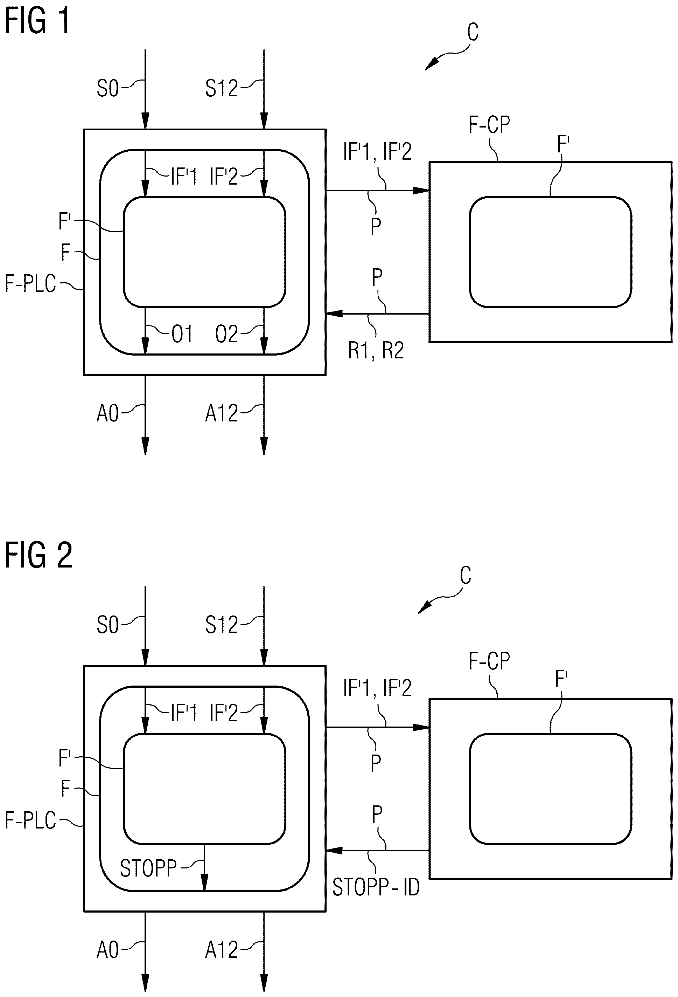

In Figur 1 ist ein erstes Ausführungsbeispiel gezeigt, bei dem in einem Steuerungssystem C für eine Anlage mit bewegungsgesteuerten Komponenten eine erste sicherheitsgerichtete Steuerungseinrichtung, insbesondere eine Failsafe-PLC F-PLC) vorgesehen ist, auf der Steuerungsprogrammcode sicherheitsgerichtet ausgeführt wird unter Ausnutzung eines Coded Processing Verfahrens. Dabei wird der Steuerungsprogrammcode in Software diversitär ausgeführt, so dass die Wahrscheinlichkeit für unerkannt bleibende Systemfehler oder Ausführungsfehler den Anforderungen an die Sicherheit des Systems entsprechend gering sind.

Im ersten Ausführungsbeispiel handelt es sich um eine Anlage, bei der Greifarmroboter zum Einsatz kommen und in Bereiche eindringen, in welchen Menschen agieren. Entsprechend werden an das Steuerungssystem C Safety-Anforderungen gestellt, die eine sicherheitsgerichtete Überwachung der Bewegungen, ein entsprechendes Einleiten von Sicherheitsmaßnahmen je nach Bewegungsmuster oder -Verlauf, das Vorsehen von Not-StoppVorgängen, etc. sicherstellen.

Auf der Failsafe-PLC F-PLC wird ein Sicherheitsanwenderprogramm erstellt, das die Safety Anforderungen umsetzt und welches eine Sicherheitsfunktion F aufweist. Die Sicherheitsfunktion F umfasst insbesondere mehrere Sicherheitsfunktionsbausteine, die festlegen, wie eine Reaktion der Antriebe auf das Betätigen von Not-Aus-Schaltern zu erfolgen hat oder wie axiale Sicherheitsfunktionen parametrisiert sind. Beispielsweise ist in einem Sicherheitsfunktionsbaustein der Sicherheitsfunktion F eine axiale Geschwindigkeitsüberwachung, axiale Kraftüberwachung sowie axiale Drehmomentüberwachung vorgesehen, bei der für die jeweiligen Größen Grenzwerte vorgegeben werden. Beispielsweise wird je Achse ein Grenz-Drehmoment vorgegeben, bei deren Überschreiten die Kinematik einen Stopp einleitet.

Beispielsweise soll ferner die Geschwindigkeit eines sich bewegenden Endeffektors im kartesischen Raum verringert werden, wenn sich dieser dem Bereich einer Sicherheitszone nähert, in die dieser nicht eindringen darf. Beispielsweise soll ferner ein Stopp eingeleitet, wenn er an die Zonengrenze gelangt.

Für diese Art der Sicherheitsüberwachung wird die aktuelle Position des Roboters und seiner Achs-Segmente im Raum ermittelt und mit definierten und durch Zonen festgelegten Raumbereichen abgeglichen. Dafür werden Berechnungen benötigt, die beispielsweise auf trigonometrischen Beziehungen zwischen Achsen der Kinematik basieren. Ferner werden Parameter vorgegeben, die die Kinematik oder Eigenschaften der Kinematik beschreiben, beispielsweise Abmessungen oder Bewegungsradien. Diese Angaben sind Anlagen- oder Maschinenherstellerspezifisch und daher individuell und durch einen Anlagenbetreiber in der Regel nicht beeinflussbar. Die Werte, die als Parameter vorgegeben werden, sind somit oftmals nur durch Fließkommazahlen zu beschreiben.

Diese Funktionalität mit komplexen Berechnungen basierend auf arithmetischen Operationen werden in einer Sicherheitsunterfunktion F' gekapselt und als modularer Software-Baustein für die Ausführung auf die zweite sicherheitsgerichtete Steuerungseinrichtung als Safety Co-Prozessor F-CP ausgelagert.

Das Sicherheitsanwenderprogramm zum Betreiben des Roboters wird auf der Failsafe-PLC F-PLC programmiert. Auch die Sensorik S0, S12 ist mit der Failsafe-PLC F-PLC verbunden und liefert Werte zu Positionen, Geschwindigkeiten, Schalterzuständen etc.

Sichere Eingänge IF'1, IF'2 für die Sicherheitsunterfunktion, wie insbesondere Achswerte von Gebern, die für die Ausführung der Sicherheitsunterfunktion benötigt werden, werden von der Failsafe-PLC F-PLC über eine sichere Kommunikationsverbindung P, insbesondere auf einem sicheren Telegramm, beispielsweise gemäß der PROFIsafe-Norm, basierend, an den Safety-Co-Prozessor F-CP übertragen. Über die sichere Kommunikationsverbindung P werden ferner als Ergebnisse R1, R2 Daten vom Safety-Co-Prozessor F-CP zurück an die Failsafe-PLC F-PLC geliefert.

Gemäß dem ersten Ausführungsbeispiel ermittelt die Sicherheitsunterfunktion F' aus Abmessungen der Kinematik, Achswerten der einzelnen Achsen der Kinematik oder axialen Fehlerwerten Werte für Größen wie Position und Geschwindigkeit im kartesischen Raum. Diese Werte werden mittels trigonometrischer Beziehungen und basierend auf Eingangswerten, die Fließkommazahlen umfassen, berechnet. Für diese Berechnung ist vorteilhafterweise die uncodierte Ausführung auf dem Safety-Co-Prozessor F-CP vorgesehen, auf dem die sicherheitsgerichtete Ausführung auf einer Hardware-Redundanz mittels Lockstep-Prozessoren beruht. Dies ermöglicht ein einfaches Umsetzen der arithmetischen Operationen ohne Behelfs-Umrechnungen, die bei einer codierten Verarbeitung wie dem Coded Processing notwendig wären.

Die Ergebnisse R1, R2 der Sicherheitsunterfunktion F' werden auf dem Safety-Co-Prozessor F-CP von der Sicherheitsfunktion F weiterverarbeitet. Beispielsweise wird eine Position des Endeffektors an die Failsafe-PLC F-PLC zurückgegeben, ein anschließender Abgleich, der das Überschreiten von Grenzwerten oder das Eindringen in Sperrzonen umfasst, und das Ausgeben entsprechender Ergebnisse O1, O2 des Abgleichs, erfolgt auf der F-PLC.

Die Failsafe-PLC F-PLC ist zudem für das Umsetzen der Reaktionen mit Aktorik A0, A12, beispielsweise mit den Antrieben der Achsen, verbunden. Im Rahmen der Sicherheitsfunktion F sind Reaktionen vorgegeben, die bei Verletzungen vorgegebener Schranken erfolgen sollen, beispielsweise die Bedingungen für eine Lahmlegung von Antrieben. Der Abgleich von sowohl mittels der Sicherheitsfunktion F als auch mittels der Sicherheitsunterfunktion F' ermittelten Werten mit vorgegebenen Grenzwerten erfolgt somit gemäß dem ersten Ausführungsbeispiel auf der Failsafe-PLC F-PLC.

Die Failsafe-PLC F-PLC ist als Haupt-Schleife des Sicherheitsprogramms anzusehen und ist quasi Hauptanlaufstelle für die Kinematik. Auch die sichere Sensorik S0, S12 ist an die Failsafe-PLC F-PLC angeschlossen.

Es ist Sensorik S0 und Aktorik A0 vorgesehen, die unabhängig von der Verarbeitung auf dem Safety-Co-Prozessor F-CP an Eingängen Werte liefern und an Ausgängen Werte bereitgestellt bekommen.

Gemäß einem zweiten Ausführungsbeispiel bekommt der Safety-Co-Prozessor F-CP alle benötigten Daten, wie insbesondere die Achspositionen aller beteiligten Achsen, über definierte Schnittstellen bereitgestellt. Insbesondere werden zugehörige Counterwerte oder Zeitstempel mit übertragen, um die Vergleichbarkeit der verschiedenen Achswerte sicherzustellen und zeitliche Verzögerungen bei der Bereitstellung oder Übertragung berücksichtigen zu können.

Beispielsweise wählt der Anwender bei einer sicheren Bewegungsüberwachung ferner noch aus, welche Zonen einer Zonenüberwachung aktiv sind, oder welche Kegel überwacht werden. Dies wird über Schnittstellen zum Anwenderprogramm auf der Failsafe-PLC realisiert.

Eingangsdaten, die die Sicherheitsunterfunktion F' betreffen werden quasi von der Sicherheitsfunktion F an die Sicherheitsunterfunktion F' weitergeleitet und mittels sicherer Kommunikationsverbindung P auf den Safety-Co-Prozessor F-CP übertragen.

Beispielsweise ist der Safety-Co-Prozessor ein Multi-Core-Prozessor mit mehreren Safety-Cores. Auf dem Safety-Co-Prozessor F-CP ist je Safety Core ein Dual Core Prozessor verbaut, der nach dem Lockstep-Mechanismus eine Datenverarbeitung durchführt. Dabei rechnen ein sogenannter Master und ein sogenannter Checker die gleichen Schritte, lediglich auf geometrisch leicht versetzten Cores des Prozessors, beispielsweise leicht gedreht und mit unterschiedlichen zeitlichen Randbedingungen, sodass ein Fehler, der sich durch beide Pfade zieht, nicht zu gleichen Ergebnissen der zwei Cores führt. Stimmen die Ergebnisse beider Berechnungen auf dem Dual-Core-Prozessor überein, wird das Ergebnis als richtig anerkannt und durch die Sicherheitsunterfunktion F' weiterverarbeitet.

In Figur 2 ist veranschaulicht, dass der Safety-Co-Prozessor F-CP als Ergebnis STOP-ID der Sicherheitsunterfunktion F' eine Kennung eines Stopp-Vorganges liefert. Die Sicherheitsunterfunktion F' liefert somit nicht nur Werte zur weiteren Verarbeitung durch die Sicherheitsfunktion F der Failsafe-PLC F-PLC, sondern liefert ein Ergebnis STOP-ID, das als Ausgang STOP von der Sicherheitsfunktion F direkt an einen Aktor A12 weitergegeben werden kann. Beispielsweise wird dadurch direkt das Stoppen an einem Antrieb bewirkt.

Beispielsweise wird in Varianten durch die Sicherheitsfunktion F festgelegt, welche Maßnahme bei Vorliegen eines Ergebnisses STOP-ID der Sicherheitsunterfunktion F' eingeleitet wird. Somit wird das Ergebnis STOP-ID zwar nicht weiterverarbeitet, es wird jedoch mittels der Sicherheitsfunktion F eine Zuordnung von Ergebnissen der Sicherheitsunterfunktion F' zu Maßnahmen, die von der Failsafe-PLC F-PLC eingeleitet werden, durch einen Anwender festgelegt.

Bei den bislang beschriebenen Ausgängen der Sicherheitsunterfunktion F' handelt es sich um bei ordnungsgemäßer und fehlerfreier Ausführung der Berechnungen auf dem Safety-Co-Prozessor F-CP erhaltene Ergebnisse. Es kann sich dabei um Ergebnisse handeln, die die Verletzung oder nicht-Verletzung von Grenzwerten oder Zonen beschreiben, wie oben beschrieben als Rohwerte oder Zwischenwerte, die auf der Failsafe-PLC weiterverarbeitet werden, oder bereits als Endergebnisse eines Sicherheitsfunktionsbausteins mit entsprechend möglicher direkter Ausgabe einer programmierten Reaktion im Falle einer Verletzung von Zonen oder Grenzwerten an einen Aktor.

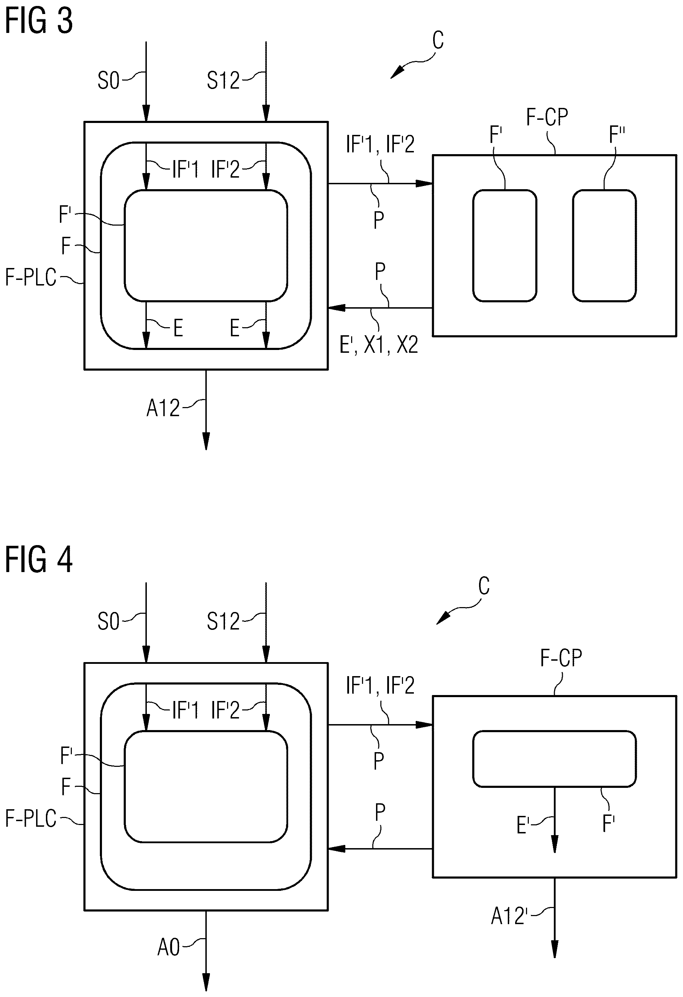

Figur 3 veranschaulicht ein drittes Ausführungsbeispiel, bei dem auf dem Safety-Co-Prozessor F-CP ein Fehler E' erkannt wird. Beispielsweise wird ein hardwareseitiger Ausfall in einem der Prozessorkerne detektiert oder ein sonstiger Fehler in einem Halbleiterbauelement des Prozessors.

Als Ergebnis liefert der Safety-Co-Prozessor F-CP einen Hinweis auf den Systemfehler E' an die Failsafe-PLC F-PLC zurück. Zudem werden Ersatzwerte X1, X2 geliefert, anhand derer auch erkannt wird, dass ein "Stopp" vorliegt. Da im Fehlerzustand nicht gewährleistet ist, dass der Safety-Co-Prozessor F-CP noch integer ist, wird die Kommunikation zur Sicherheit abgebrochen und es liegen die sicheren Ersatzwerte an.

Auf dem Safety-Co-Prozessor F-CP laufen beispielsweise mehrere Sicherheitsunterfunktionen F', F". Wird auf dem Safety-Co-Prozessor F-CP ein Systemfehler E' erkannt, so werden alle Applikationen, die durch die Sicherheitsunterfunktionen F', F" ausgeführt werden, unterbrochen. Die Failsafe-PLC F-PLC läuft weiter, leitet jedoch für alle Prozesse oder Aktionen, die von Ergebnissen einer der Sicherheitsunterfunktionen F', F" abhängen, sichere Zustände E ein.

Beispielsweise wird auf dem Safety-Co-Prozessor F-CP als erste Sicherheitsunterfunktion F' eine sichere Bewegungsüberwachung realisiert und als zweite Sicherheitsunterfunktion F" eine sichere Kraftüberwachung. Der Safety-Co-Prozessor F-CP ist beispielsweise frei programmierbar und ermöglicht die Ausführung von beliebig komplexen, vom Anwender definierten, sicherheitsrelevanten Unterprogrammen. Durch die Auslagerung des Unterprogramms werden auf der codiert-arbeitenden Steuerung Ressourcen frei, die vorteilhafterweise für andere Safety- bzw. Standard-Operationen zur Verfügung stehen.

Gemäß einem vierten Ausführungsbeispiel wird auf dem Safety-Co-Prozessor F-CP als Sicherheitsunterfunktion F' eine sichere Personenerkennung im industriellen Umfeld mittels RTLS, Real Time Locating System, ausgeführt. Insbesondere für Anhaltevorgänge von bewegten Maschinenteilen oder von Autonomen mobilen Robotern (AMR) in Fällen, in denen Personen nahekommen, ist die sichere Lokalisierung in Echtzeit ein Erfordernis beispielsweise in Fabriken, Fertigungs- oder Lagerhallen.

Figur 4 veranschaulicht das vierte Ausführungsbeispiel. Das Auslagern der Sicherheitsunterfunktion F' zu Zwecken der uncodierten Ausführung auf den Safety-Co-Prozessor F-CP erfolgt nach einem der obigen Beispiele. Ein Ergebnis der Sicherheitsunterfunktion F' bei korrekter Ausführung, d.h. so lange der Safety-Co-Prozessor gesichert fehlerfrei den Programmcode ausführt, wird ebenfalls nach einem der obigen Beispiele an die Failsafe-PLC F-PLC zurückgeliefert.

Der Safety-Co-Prozessor F-CP ist nicht frei-programmierbar, sodass Software und Hardware gemeinsam für die Ausführung der RTLS-Funktionalität optimiert sind.

Wird bei der sicherheitsgerichteten Ausführung des Programmcodes auf dem Safety-Co-Prozessor F-CP ein Systemfehler erkannt, wird an die Failsafe-PLC F-PLC lediglich eine Diagnosenachricht ausgegeben. Die Kommunikation von Ergebniswerten wird unterbunden über die sichere Kommunikationsverbindung P. Die Maßnahmen für das Einnehmen eines sicheren Zustandes bewegter Komponenten aufgrund einer erkannten Person im Umfeld der Komponenten werden direkt von dem Safety-Co-Prozessor F-CP eingeleitet. Dafür ist er direkt mit Aktorik A12' verbunden und das Ausgeben eines erkannten Systemfehlers E' führt beispielsweise zum sicheren Stopp eines Robotergreifarms oder eines AMRs. An die Failsafe-PLC F-PLC wird lediglich die Information gegeben, dass ein Stopp eingeleitet wurde. Die Failsafe-PLC F-PLC selbst ist ebenfalls mit Aktorik A0 verbunden und leitet Reaktionen je nach Ergebnis von auf der Failsafe-PLC F-PLC ausgeführten Sicherheitsfunktionen F ein.

Durch die direkte Verschaltung des Safety-Co-Prozessors F-CP mit Aktorik A12' zur Lahmlegung entsprechender Antriebe ist eine besonders schnelle Reaktion im Safety-kritischen Umfeld mit Echtzeitanforderung notwendig.

In Varianten kann auch Sensorik direkt an den Safety-Co-Prozessor F-CP angeschlossen sein, um besonders hohe Reaktionszeiten sicherzustellen.

Zusammenfassend dient eine codiert arbeitende erste sicherheitsgerichtete Steuerungseinrichtung als Basis zur Anbindung an die Automatisierungswelt und wird insbesondere frei vom Anwender programmiert. Es werden die Vorteile im Hinblick auf Durchgängigkeit und Skalierbarkeit beispielsweise von Coded Processing vollständig ausgenutzt. Aufwändige Berechnungen in Programmcode, die insbesondere mit Programmiersprachen gängiger Failsafe-PLCs, wie beispielsweise F-FUP oder F-KOP, gar nicht, nur langsam oder mit enorm hohem manuellem Aufwand möglich sind, werden auf der zweiten sicherheitsgerichteten Steuerungseinrichtung als Sicherheitsunterfunktion ausgeführt und ermöglichen die Realisierung von komplexen Funktionen. Dazu zählen beispielsweise inverse Operationen, die Verwendung von Fließkommazahlen, Sinus- oder Wurzelfunktionen etc. Das Sicherheitsunterprogramm läuft mittels geeigneter Hardware-Redundanz uncodiert auf dem Co-Prozessor ab und implementiert performance-kritische Programmanteile.

### Aufzählung von Ausgestaltungen:

1. Steuerungssystem (C) zur Steuerung einer Vorrichtung oder Anlage, wobei bezüglich der Steuerung der Vorrichtung oder Anlage mindestens eine Sicherheitsfunktion (F) vorgesehen ist,
   wobei die mindestens eine Sicherheitsfunktion (F) mindestens eine Sicherheitsunterfunktion (F') aufweist,
   wobei das Steuerungssystem (C) eine erste sicherheitsgerichtete Steuerungseinrichtung (F-PLC) sowie eine zweite sicherheitsgerichtete Steuerungseinrichtung (F-CP) umfasst,
   wobei die erste sicherheitsgerichtete Steuerungseinrichtung (F-PLC) und die zweite sicherheitsgerichtete Steuerungseinrichtung (F-CP) über eine sicherheitsgerichtete Kommunikationsverbindung (P) kommunikativ gekoppelt sind,
   wobei die erste sicherheitsgerichtete Steuerungseinrichtung (F-PLC) zur Ausführung der mindestens einen Sicherheitsfunktion (F) ausgebildet und eingerichtet ist,
   wobei die zweite sicherheitsgerichtete Steuerungseinrichtung (F-CP) auf einer Prozessoreinheit basierend und zur Ausführung der mindestens einen Sicherheitsunterfunktion (F') unter Verwendung von über die sicherheitsgerichtete Kommunikationsverbindung (P) von der ersten sicherheitsgerichteten Steuerungs-einrichtung (F-PLC) empfangenen Eingangsdaten (IF'1, IF'2) ausgebildet und eingerichtet ist.
2. Steuerungssystem (C) nach Aufzählungspunkt 1, wobei die erste sicherheitsgerichtete Steuerungseinrichtung (F-PLC) ausgebildet und eingerichtet ist, die mindestens eine Sicherheitsfunktion (F) unter Verwendung eines codiert arbeitenden Verfahrens, insbesondere eines "Coded Processing"-Verfahrens, auszuführen.
3. Steuerungssystem (C) nach einem der Aufzählungspunkte 1 oder 2, wobei die zweite sicherheitsgerichtete Steuerungseinrichtung (F-PLC) ausgebildet und eingerichtet ist, die mindestens eine Sicherheitsunterfunktion (F') unter Verwendung eines uncodiert arbeitenden Verfahrens auszuführen.
4. Steuerungssystem (C) nach einem der vorangehenden Aufzählungspunkte, wobei die zweite sicherheitsgerichtete Steuerungseinrichtung (F-CP) ausgebildet und eingerichtet ist, eine Hardware-Redundanz auf der Prozessoreinheit, insbesondere basierend auf einer Mehrkernarchitektur mit Lockstep-Kernen, umzusetzen.
5. Steuerungssystem (C) nach einem der vorangehenden Aufzählungspunkte, wobei die erste sicherheitsgerichtete Steuerungseinrichtung (F-PLC) ausgebildet und eingerichtet ist, von der zweiten sicherheitsgerichteten Steuerungseinrichtung (F-CP) Ausgangsdaten (R1, R2, STOP-ID) zu empfangen.
6. Steuerungssystem (C) nach einem der vorangehenden Aufzählungspunkte, wobei die erste sicherheitsgerichtete Steuerungseinrichtung (F-PLC) ausgebildet und eingerichtet ist, von der zweiten sicherheitsgerichteten Steuerungseinrichtung (F-CP) über die sicherheitsgerichtete Kommunikationsverbindung (P) empfangene Ausgangsdaten (R1, R2) für die Ausführung der mindestens einen Sicherheitsfunktion (F) zu verarbeiten.
7. Steuerungssystem (C) nach einem der vorangehenden Aufzählungspunkte, wobei die zweite sicherheitsgerichtete Steuerungseinrichtung (F-CP) ausgebildet und eingerichtet ist, abhängig von einem Ergebnis der Sicherheitsunterfunktion (F') eine Sicherheitsmaßnahme einzuleiten.
8. Steuerungssystem (C) nach einem der vorangehenden Aufzählungspunkte, wobei die erste sicherheitsgerichtete Steuerungseinrichtung (F-PLC) ausgebildet und eingerichtet ist, eine Sicherheitsmaßnahme in Abhängigkeit von über die sicherheitsgerichtete Kommunikationsverbindung (P) empfangenen Ausgangsdaten einzuleiten.
9. Verfahren zur Steuerung einer Vorrichtung oder Anlage, wobei die Vorrichtung oder Anlage mittels mindestens einer Sicherheitsfunktion (F) gesteuert wird,
   wobei die mindestens eine Sicherheitsfunktion (F) mindestens eine Sicherheitsunterfunktion (F') aufweist,
   wobei ein Steuerungssystem (C) eine erste sicherheitsgerichtete Steuerungseinrichtung (F-PLC) sowie eine zweite sicherheitsgerichtete Steuerungseinrichtung (F-CP) umfasst,
   wobei die erste sicherheitsgerichtete Steuerungseinrichtung (F-PLC) und die zweite sicherheitsgerichtete Steuerungseinrichtung (F-CP) über eine sicherheitsgerichtete Kommunikationsverbindung (P) Daten austauschen,
   wobei die erste sicherheitsgerichtete Steuerungseinrichtung (F-PLC) die mindestens eine Sicherheitsfunktion (F) ausführt,
   wobei die zweite sicherheitsgerichtete Steuerungseinrichtung (F-CP) auf einer Prozessoreinheit basiert und die mindestens eine Sicherheitsunterfunktion (F') unter Verwendung von empfangenen Eingangsdaten (IF'1, IF'2) ausführt.
10. Verfahren nach Aufzählungspunkt 9, wobei die erste sicherheitsgerichtete Steuerungseinrichtung (F-PLC) die mindestens eine Sicherheitsfunktion (F) unter Verwendung eines codiert arbeitenden Verfahrens, insbesondere eines "Coded Processing"-Verfahrens, ausführt.
11. Verfahren nach Aufzählungspunkt 9 oder 10, wobei die zweite sicherheitsgerichtete Steuerungseinrichtung (F-CP) die mindestens eine Sicherheitsunterfunktion (F') unter Verwendung eines uncodiert arbeitenden Verfahrens ausführt.
12. Verfahren nach einem der Aufzählungspunkte 9 bis 11, wobei die zweite sicherheitsgerichtete Steuerungseinrichtung (F-CP) eine Hardware-Redundanz auf der Prozessoreinheit, insbesondere basierend auf einer Mehrkernarchitektur mit Lockstep-Kernen, umsetzt.
13. Verfahren nach einem der Aufzählungspunkte 9 bis 12, wobei die erste sicherheitsgerichtete Steuerungseinrichtung (F-PLC) von der zweiten sicherheitsgerichteten Steuerungseinrichtung (F-CP) Ausgangsdaten empfängt.
14. Verfahren nach einem der Aufzählungspunkte 9 bis 13, wobei die erste sicherheitsgerichtete Steuerungseinrichtung (F-PLC) von der zweiten sicherheitsgerichteten Steuerungseinrichtung über die sicherheitsgerichtete Kommunikationsverbindung (P) empfangene Ausgangsdaten für die Ausführung der mindestens einen Sicherheitsfunktion verarbeitet.
15. Verfahren nach einem der Aufzählungspunkte 9 bis 14, wobei die zweite sicherheitsgerichtete Steuerungseinrichtung (F-CP) abhängig von einem Ergebnis der Sicherheitsunterfunktion eine Sicherheitsmaßnahme einleitet.
16. Verfahren nach einem der Aufzählungspunkte 9 bis 15, wobei die erste sicherheitsgerichtete Steuerungseinrichtung (F-PLC) eine Sicherheitsmaßnahme in Abhängigkeit von über die sicherheitsgerichtete Kommunikationsverbindung (P) empfangenen Ausgangsdaten einleitet.
17. Verfahren nach einem der Aufzählungspunkte 9 bis 16, wobei die empfangenen Eingangsdaten (IF'1, IF'2) über die sicherheitsgerichtete Kommunikationsverbindung (P) von der ersten sicherheitsgerichteten Steuerungseinrichtung (F-PLC) oder über einen an die zweite sicherheitsgerichtete Steuerungseinrichtung (F-CP) angeschlossenen Sensor empfangen werden.

## Patentansprüche

1. Steuerungssystem (C) zur Steuerung einer Vorrichtung oder Anlage, wobei bezüglich der Steuerung der Vorrichtung oder Anlage mindestens eine Sicherheitsfunktion (F) vorgesehen ist,
wobei die mindestens eine Sicherheitsfunktion (F) mindestens eine Sicherheitsunterfunktion (F') aufweist,
wobei das Steuerungssystem (C) eine erste sicherheitsgerichtete Steuerungseinrichtung (F-PLC) sowie eine zweite sicherheitsgerichtete Steuerungseinrichtung (F-CP) umfasst,
wobei die erste sicherheitsgerichtete Steuerungseinrichtung (F-PLC) und die zweite sicherheitsgerichtete Steuerungseinrichtung (F-CP) über eine sicherheitsgerichtete Kommunikationsverbindung (P) kommunikativ gekoppelt sind,
wobei die erste sicherheitsgerichtete Steuerungseinrichtung (F-PLC) zur Ausführung der mindestens einen Sicherheitsfunktion (F) ausgebildet und eingerichtet ist,
wobei die zweite sicherheitsgerichtete Steuerungseinrichtung (F-CP) auf einer Prozessoreinheit basierend und zur Ausführung der mindestens einen Sicherheitsunterfunktion (F') unter Verwendung von über die sicherheitsgerichtete Kommunikationsverbindung (P) von der ersten sicherheitsgerichteten Steuerungs-einrichtung (F-PLC) empfangenen Eingangsdaten (IF'1, IF'2) ausgebildet und eingerichtet ist,
wobei die erste sicherheitsgerichtete Steuerungseinrichtung (F-PLC) ausgebildet und eingerichtet ist, von der zweiten sicherheitsgerichteten Steuerungseinrichtung (F-CP) über die sicherheitsgerichtete Kommunikationsverbindung (P) empfangene Ausgangsdaten (R1, R2) für die Ausführung der mindestens einen Sicherheitsfunktion (F) zu verarbeiten.

2. Steuerungssystem (C) nach Anspruch 1, wobei die erste sicherheitsgerichtete Steuerungseinrichtung (F-PLC) ausgebildet und eingerichtet ist, die mindestens eine Sicherheitsfunktion (F) unter Verwendung eines codiert arbeitenden Verfahrens, insbesondere eines "Coded Processing"-Verfahrens, auszuführen.

3. Steuerungssystem (C) nach Anspruch 1 oder 2, wobei die zweite sicherheitsgerichtete Steuerungseinrichtung (F-PLC) ausgebildet und eingerichtet ist, die mindestens eine Sicherheitsunterfunktion (F') unter Verwendung eines uncodiert arbeitenden Verfahrens auszuführen.

4. Steuerungssystem (C) nach einem der vorstehenden Ansprüche, wobei die zweite sicherheitsgerichtete Steuerungseinrichtung (F-CP) ausgebildet und eingerichtet ist, eine Hardware-Redundanz auf der Prozessoreinheit, insbesondere basierend auf einer Mehrkernarchitektur mit Lockstep-Kernen, umzusetzen.

5. Steuerungssystem (C) nach einem der vorstehenden Ansprüche, wobei die zweite sicherheitsgerichtete Steuerungseinrichtung (F-CP) ausgebildet und eingerichtet ist, abhängig von einem Ergebnis der Sicherheitsunterfunktion (F') eine Sicherheitsmaßnahme einzuleiten.

6. Steuerungssystem (C) nach einem der vorstehenden Ansprüche, wobei die erste sicherheitsgerichtete Steuerungseinrichtung (F-PLC) ausgebildet und eingerichtet ist, eine Sicherheitsmaßnahme in Abhängigkeit von über die sicherheitsgerichtete Kommunikationsverbindung (P) empfangenen Ausgangsdaten einzuleiten.

7. Verfahren zur Steuerung einer Vorrichtung oder Anlage, wobei die Vorrichtung oder Anlage mittels mindestens einer Sicherheitsfunktion (F) gesteuert wird,
wobei die mindestens eine Sicherheitsfunktion (F) mindestens eine Sicherheitsunterfunktion (F') aufweist,
wobei ein Steuerungssystem (C) eine erste sicherheitsgerichtete Steuerungseinrichtung (F-PLC) sowie eine zweite sicherheitsgerichtete Steuerungseinrichtung (F-CP) umfasst,
wobei die erste sicherheitsgerichtete Steuerungseinrichtung (F-PLC) und die zweite sicherheitsgerichtete Steuerungseinrichtung (F-CP) über eine sicherheitsgerichtete Kommunikationsverbindung (P) Daten austauschen,
wobei die erste sicherheitsgerichtete Steuerungseinrichtung (F-PLC) die mindestens eine Sicherheitsfunktion (F) ausführt,
wobei die zweite sicherheitsgerichtete Steuerungseinrichtung (F-CP) auf einer Prozessoreinheit basiert und die mindestens eine Sicherheitsunterfunktion (F') unter Verwendung von empfangenen Eingangsdaten (IF'1, IF'2) ausführt,
wobei die erste sicherheitsgerichtete Steuerungseinrichtung (F-PLC) von der zweiten sicherheitsgerichteten Steuerungseinrichtung über die sicherheitsgerichtete Kommunikationsverbindung (P) empfangene Ausgangsdaten für die Ausführung der mindestens einen Sicherheitsfunktion verarbeitet.

8. Verfahren nach Anspruch 7, wobei die erste sicherheitsgerichtete Steuerungseinrichtung (F-PLC) die mindestens eine Sicherheitsfunktion (F) unter Verwendung eines codiert arbeitenden Verfahrens, insbesondere eines "Coded Processing"-Verfahrens, ausführt.

9. Verfahren nach Anspruch 7 oder 8, wobei die zweite sicherheitsgerichtete Steuerungseinrichtung (F-CP) die mindestens eine Sicherheitsunterfunktion (F') unter Verwendung eines uncodiert arbeitenden Verfahrens ausführt.

10. Verfahren nach einem der Ansprüche 7 bis 9, wobei die zweite sicherheitsgerichtete Steuerungseinrichtung (F-CP) eine Hardware-Redundanz auf der Prozessoreinheit, insbesondere basierend auf einer Mehrkernarchitektur mit Lockstep-Kernen, umsetzt.

11. Verfahren nach einem der Ansprüche 7 bis 10, wobei die zweite sicherheitsgerichtete Steuerungseinrichtung (F-CP) abhängig von einem Ergebnis der Sicherheitsunterfunktion eine Sicherheitsmaßnahme einleitet.

12. Verfahren nach einem der Ansprüche 7 bis 11, wobei die erste sicherheitsgerichtete Steuerungseinrichtung (F-PLC) eine Sicherheitsmaßnahme in Abhängigkeit von über die sicherheitsgerichtete Kommunikationsverbindung (P) empfangenen Ausgangsdaten einleitet.

13. Verfahren nach einem der Ansprüche 7 bis 12, wobei die empfangenen Eingangsdaten (IF'1, IF'2) über die sicherheitsgerichtete Kommunikationsverbindung (P) von der ersten sicherheitsgerichteten Steuerungseinrichtung (F-PLC) oder über einen an die zweite sicherheitsgerichtete Steuerungseinrichtung (F-CP) angeschlossenen Sensor empfangen werden.
